# EUROPEAN PATENT SPECIFICATION

(11) **EP 3 525 394 B1**
(45) Date of publication and mention of the grant of the patent: **27.10.2021**
(21) Application number: 18155717.4
(22) Date of filing: 08.02.2018
(51) Int. Cl.: H04L 29/06, G06Q 20/40, G06Q 20/06, H04L 9/32

(54) **ELECTRONIC DEVICES, SYSTEMS AND METHODS**
ELECTRONIC DEVICES, SYSTEMS AND METHODS
DISPOSITIFS ÉLECTRONIQUES, SYSTÈMES ET PROCÉDÉS

(43) Date of publication of application: 14.08.2019
(73) Proprietor: Sony Group Corporation, Tokyo 108-0075 (JP)
(72) Inventor: CRONIE, Harm, 1015 Lausanne (CH); NOLAN, Julian, 1015 Lausanne (CH); KOIKE, Makoto, Tokyo 108-0075 (JP)
(74) Representative: MFG Patentanwälte Meyer-Wildhagen Meggle-Freund Gerhard PartG mbB

(56) References cited:
- CN-A- 105 488 675
- US-A- 4 853 843
- US-A1- 2017 250 815

## Description

### TECHNICAL FIELD

The present disclosure generally pertains to the field of electronic data storage, in particular to the storage of transactions in a distributed ledger such as a blockchain.

### TECHNICAL BACKGROUND

A distributed ledger may for example be a distributed database, for example a distributed database that maintains a continuously growing list of data records secured from tampering and revision such as a blockchain. A blockchain consists of blocks that hold timestamped batches of valid transactions. In the following, the term transaction generally refers to a data entity that is stored as a record on the distributed ledger. A transaction may for example reflect a money transfer, a smart contract, an asset, or the like.

Blockchain technology can for example be used to track the history of money transactions (e.g. bitcoins), or it may be used to track or manage individual devices, by recording a ledger of data exchanges between the devices. Tracking or managing devices is also known under the term "Internet of Things" (IoT).

A large group of IoT devices may maintain a distributed ledger, e.g. a blockchain to record transactions (e.g. execute smart contracts). In such case, the nodes accessing the distributed ledger are devices. It may happen that a subgroup of nodes gets disconnected for a substantial amount of time from another subgroup of nodes. This subgroup may continue to maintain a distributed ledger. In such scenario, the distributed ledgers of the subgroups of nodes evolve separately. A subgroup of devices that evolves separately from the original group is also denoted as a "fork" of the original group.

A connection between two separate distributed ledgers may form when nodes contributing to the distributed ledgers establish a connection. In such case, the distributed ledgers may be merged. However, it is not clear that there is a basis for a merger and sharing may reveal sensitive information.

For Internet-of-Things (IoT) applications, a large group of devices may operate a distributed ledger or blockchain. The consensus mechanism in such distributed ledger may be based on either a consensus algorithm or a mining process.

Although there exist distributed ledger techniques, it is generally desirable to make distributed ledger techniques more reliable and secure.

Patent Literature US 2017/0250815 A1 dislcoses that in some implementations, a data unit may be hashed to generate a hash. A cryptographic structure, such as a Merkle tree or other cryptographic structure, maybe generated based on the hash and published on a block chain or distributed ledger.

Patent Literature US 4 853 843 A discloses an object-oriented, distributed data base system separates into a plurality of virtual partitions following communication failure between sites accessing the data base.

Patent Literature CN 105 488 675 A discloses an invention that relates to the digital transaction in assets on the Internet, and provides a distributed shared general ledger construction method of a block chain.

### SUMMARY

The invention is defined by the independent claims.

Further aspects are set forth in the dependent claims, the following description and the drawings.

### BRIEF DESCRIPTION OF THE DRAWINGS

Embodiments are explained by way of example with respect to the accompanying drawings, in which:
Figs. 1a-e schematically describe a group of nodes that split into two subgroups and subsequently reestablish connection;
Fig. 2 schematically describes a method of an authentication process with which a first distributed ledger may decide to authorize merging with a second distributed ledger;
Figs. 3a-d schematically describe the splitting and rejoining of nodes and transactions in subgroups. In Fig. 3a, seven exemplary nodes A, B, C, D, E, F and G, during a timespan t1, are interconnected to each other so that they form a single group. In this timespan, nodes A-G record transactions to the same distributed ledger.
Figs. 4a-e schematically describe a second exemplifying group of nodes that split into two subgroups and subsequently reestablish connection;
Fig. 5 describes a process that may be implemented by a node group A when it loses and subsequently reestablishes connection to a node group B; and
Fig. 6 schematically describes an embodiment of an electronic device that may be used in context of the embodiments, e.g. as a node of a distributed ledger.

### DETAILED DESCRIPTION OF EMBODIMENTS

In the embodiments described below, a local copy of a distributed ledger is stored on nodes accessing the distributed ledger. On a periodical basis, each node determines which group of nodes can be reached from that node. Connection between nodes may be established, terminated and reestablished. This may lead to subgroups of nodes that are in direct communication but which are not on direct communication with nodes of other subgroups. Subgroups of nodes may continue to record transactions on the distributed ledger. However, only transactions involving assets of the nodes included in a subgroup are considered valid. This effectively creates a fork of the distributed ledger for the subgroup.

In the embodiments, a method is disclosed comprising determining if two separated distributed ledgers share a common history. For example, if it is determined that two separated distributed ledgers share a common history, it may be concluded that the two distributed ledgers are forks of the same original distributed ledger.

A common history may for example relate to specific transactions or blocks of transactions that are stored in both distributed ledgers. In the case of blockchains, a common history may for example be reflected by historic blocks that two blockchains share.

Determining if two separated distributed ledgers share a common history may comprise using a challenge response authentication scheme. The challenge response authentication scheme may be configured to base challenges on the content of a distributed ledger. For example, as a challenge, a distributed ledger may be requested to return a hash of a block of the distributed ledger.

The distributed ledger to which the request is directed may then return the hash of the block of the distributed ledger. The distributed ledger that issued the request may check if the returned hash is correct, and establish that the two distributed ledgers share a common history based on one or more of such challenge requests.

The method may further comprise merging the two distributed ledgers if the determination has revealed that the two distributed ledgers are forks of the same original distributed ledger. For example, once a first group of nodes reestablishes a connection with a second group of nodes, the transactions that have occurred in the first group of nodes may be announced to the second group of nodes, and/or vice-versa.

Determining if two forks share a history may be carried out in the case that a communication between two forks of a distributed ledger is reestablished. The methods described in the embodiments may allow that distributed ledgers are merged based on their shared history without revealing privacy-sensitive information before the merge.

If the nodes of a distributed ledger are split up into several disconnected groups, as described above, this may lead to separated distributed ledgers of different sizes. Subgroups of devices may lose connection to the main distributed ledger for a substantial amount of time. However, these subgroups may want to continue maintaining a distributed ledger. The setting of a small group of devices may have implications for the reliability of the consensus approach used for the distributed ledger. For instance, when the distributed ledger uses a mining approach for consensus, a small group of devices may not have enough computational power to perform mining. On the other hand, running a consensus algorithm may not be adequate in case a large majority of the subgroup is controlled by a single entity.

Accordingly, the embodiments also disclose a method comprising adapting the consensus mechanism of a distributed ledger change to the new size of the distributed ledger in the case that the number of nodes contributing to the distributed ledger changes. A consensus mechanism may for example be based on a proof of work (e.g. a mining process), or it may be based on a consensus algorithm such as a Byzantine fault tolerance algorithm, or the like.

For example, the consensus mechanism of a distributed ledger may be adapted in the case that the number of nodes contributing to a distributed ledger changes from a large group of nodes to a small group of nodes.

Adapting the consensus mechanism may comprise switching from mining to a consensus algorithm such as the Byzantine fault tolerance algorithm. For example, when a large group of nodes, which uses mining to achieve consensus, is split up into smaller groups of nodes, and a smaller group of nodes does not have enough computational power to perform mining, the consensus mechanism may be switched to a consensus algorithm such as the Byzantine fault tolerance algorithm.

Alternatively, adapting the consensus mechanism may comprise lowering the complexity of a mining process. For example, when a large group of nodes, which uses mining to achieve consensus, is split up into smaller groups of nodes, and a smaller group of nodes does not have enough computational power to perform mining at the complexity defined in the original distributed ledger, the complexity of the mining process may be lowered.

Once a small group of nodes reestablishes a connection with a large group of nodes, the transactions that have occurred may be announced to the large group of nodes as it was described above. The overall set of nodes may then incorporate these transactions and other changes that have occurred.

The embodiments thus may provide a mechanism for a group of nodes that loses connection from a distributed ledger to continue using its distributed ledger in a feasible manner. Once connection is reestablished, any transaction can be announced and incorporated into the overall distributed ledger.

The embodiments also disclose a system comprising one or more nodes that are configured to implement a distributed ledger and to determine if two separated distributed ledgers share a common history.

The embodiments further disclose a system comprising multiple nodes that are configured to implement a distributed ledger the consensus mechanism of which depends on the current number of nodes available to the distributed ledger.

A node of a distributed ledger may be any electronic device, e.g. a personal computer, a work station, a mobile computing device such as a smartphone, a tablet computer, or the like. An electronic device that acts as node of a distributed ledger may for example comprise a CPU, a storage unit (e.g. a hard drive or SSD), a memory unit (e.g. a RAM), input/output interfaces such as an Ethernet interface, a WiFi interface or the like, and user interfaces such as a keyboard, a display, a loudspeaker, and/or a microphone.

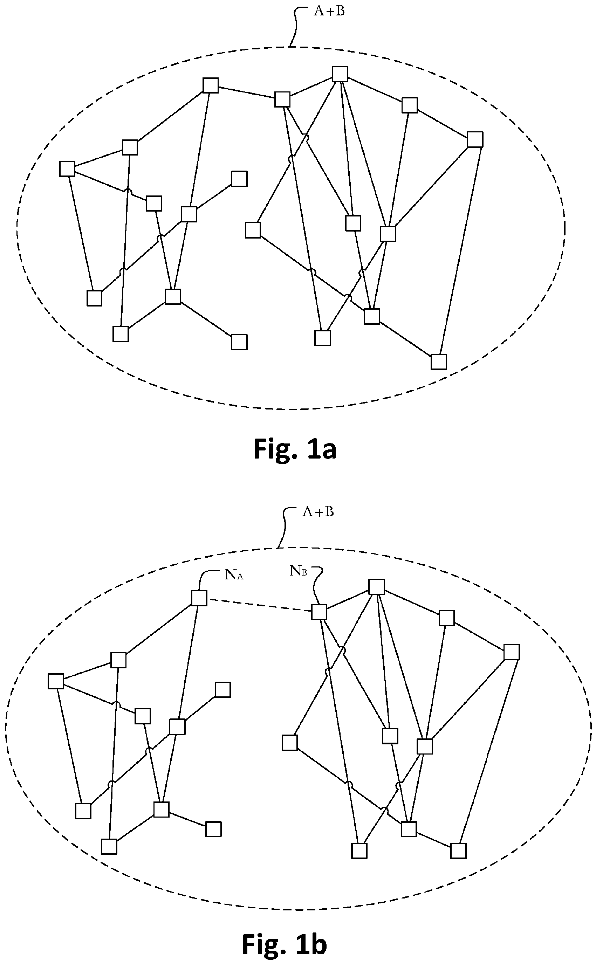

Figs. 1a-e schematically describe a first exemplifying group of nodes that split into two subgroups and subsequently reestablish connection.

In Fig. 1a, a group A+B comprises multiple nodes that each contribute to a shared distributed ledger. Some of the nodes are in direct connection with each other. The nodes may for example be interconnected by a LAN or WAN network, or by other communication technologies. All nodes of group A+B are at least in indirect connection with each other so that they all can share the same distributed ledger. The nodes record transactions on the shared distributed ledger using a predefined consensus mechanism, as it is known to the skilled person as blockchain technology. In this embodiment, a local copy of the shared distributed ledger is stored on each node accessing the distributed ledger. On a periodical basis, each node determines which group of nodes can be reached from that node.

Connection between nodes may be established, terminated and reestablished. This may lead to subgroups of nodes that are in direct communication but which are not in direct communication with nodes of other subgroups.

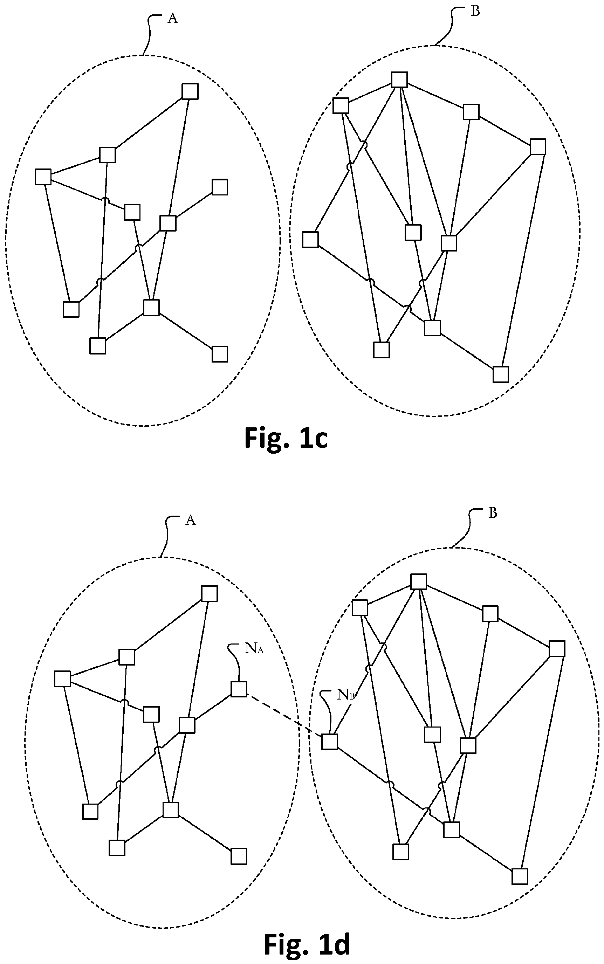

In Fig. 1b, it is shown that two devices N_{A} and N_{B} of group A+B lose their direct connection. This results in that the nodes of group A+B are separated into two subgroups A and B which are no longer interconnected to each other, as it is shown in Fig. 1c.

According to Fig. 1c, the nodes of group A and the nodes of group B can no longer contribute to the same distributed ledger. The subgroups of nodes may, however, continue to record transactions on the distributed ledger. However, only transactions involving assets of the nodes included in a subgroup are considered valid. This effectively creates a fork of the distributed ledger for the subgroup. I.e. each group of nodes may continue to record transactions into the respective distributed ledger they maintain, which results in two separated distributed ledgers (forks) that share the same history but that evolve in different ways.

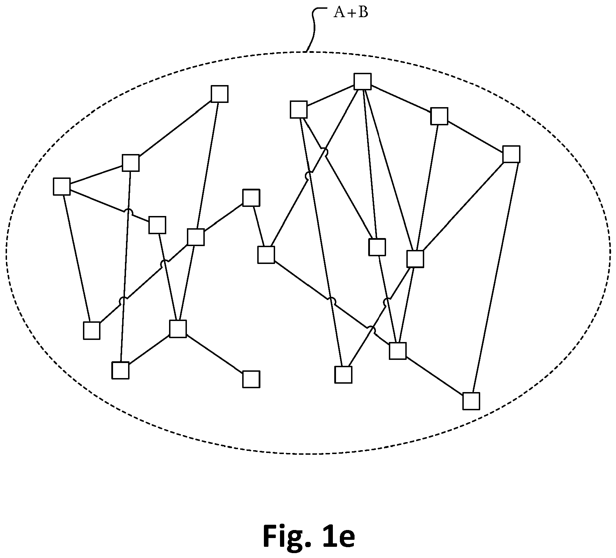

In Fig. 1d, it is shown that two devices N_{A} and N_{B} of groups A and B establish a direct connection so that the two subgroups A and B reestablish connection. This results in that the nodes can again contribute to a single distributed ledger. To this end, the distributed ledger of group A and the distributed ledger of group B may merge as is described below in more detail. Fig. 1e finally describes the situation in which the groups A and B are rejoined as group A+B. The nodes again contribute to a common shared distributed ledger.

As shown above, two distributed ledgers that share the same history may evolve independently over time after a fork has occured. Once nodes of two separated distributed ledgers establish a connection, it may make sense to merge their respective content. However, simply sharing the distributed ledgers may reveal sensitive and private information.

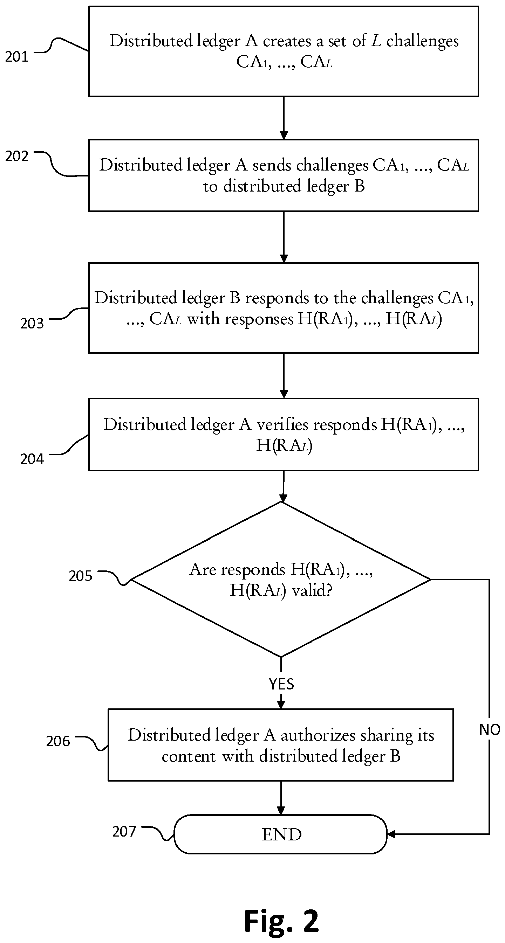

According to the embodiments described below in more detail, the content of a distributed ledger may be used to construct an authentication scheme with which it can be decided if two distributed ledgers should be merged. A process that may be implemented by a distributed ledger to implement such authentication process is now further described with reference to Fig. 2.

Fig. 2 schematically describes a method of an authentication process with which a first distributed ledger may decide to authorize merging with a second distributed ledger. At 201, a first distributed ledger called distributed ledger A creates a set of L challenges CA₁,...,CA*_{L}*. For instance each of the challenges CAᵢ may request a hash of block i to be returned. At 202, the distributed ledger A sends the challenges CA₁,...,CA*_{L}* to the second distributed ledger B. At 203, distributed ledger B responds to each of the challenges. Distributed ledger B computes the responses H(RA₁),...,H(RA*_{L}*) for each of the challenges and distributed ledger B returns the responses H(RA₁),...,H(RA*_{L}*), where H(RAᵢ) denotes a hash function of the response RAᵢ. According to this embodiment, the challenge is based on the transactions present in the distributed ledger. The general idea behind this embodiment is that distributed ledgers share a common history if they have copies of the same transactions (or block of transactions). At 204, distributed ledger A verifies the responses H(RA₁),...,H(RA*_{L}*). At 205, distributed ledger A decides to authorize a merge with distributed ledger B if the responses H(RA₁),...,H(RA*_{L}*) are positively validated, e.g. if the number of correct responses exceeds a predefined number K. If the responses H(RA₁),...,H(RA*_{L}*) are not positively validated, the process continues at 207, i.e. the process ends. If the responses H(RA₁),...,H(RA*_{L}*) are positively validated, the process continues at 206. At 206, distributed ledger A authorizes sharing its content (e.g. transactions or blocks of transactions) with distributed ledger B. The authorization process then ends at 207. After authorization, distributed ledger A may share its content with distributed ledger B, as it is disclosed below in more detail.

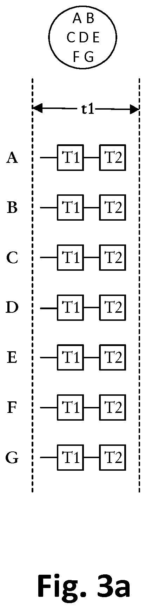

Figs. 3a-d schematically describe the splitting and rejoining of nodes and transactions in subgroups. In Fig. 3a, seven exemplary nodes A, B, C, D, E, F and G, during a timespan t1, are interconnected to each other so that they form a single group. In this timespan, nodes A-G record transactions to the same distributed ledger.

Fig. 3a depicts two exemplary transactions T1 and T2 that are recorded to the same distributed ledger. As also depicted in Fig. 3a, each node A-G holds an own local copy of the shared distributed ledger. That is, each of the nodes A-G holds a copy of exemplary transactions T1 and T2.

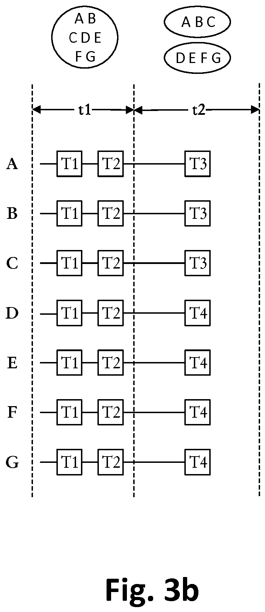

As shown in Fig. 3b, after the elapse of timespan t1, the nodes A-G split into two separated subgroups A, B, C and D, E, F, G. During timespan t2 that follows after timespan t1, the two subgroups continue to record transactions to their respective distributed ledger. However, as the two subgroups are disconnected from each other, these transactions are not shared between the respective distributed ledgers. That is, the distributed ledgers of subgroup A, B, C and subgroup D, E, F, G, even though sharing the same history (transactions T1 and T2), evolve differently. Here, for example, subgroup A, B, C records a transaction T3, whereas subgroup D, E, F, G records a transaction T4.

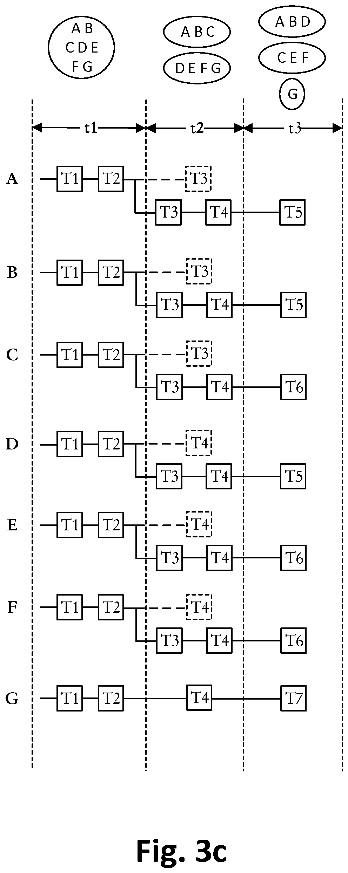

As shown in Fig. 3c, after the elapse of timespan t2, the nodes reconfigure to three new subgroups. A first subgroup comprises nodes A, B, D, a second subgroup comprises nodes C, E, F and a third subgroup comprises node G. Before the elapse of timespan t2, nodes A, B and node D belonged to different distributed ledgers. When reestablishing contact, they validate that they share a common history (transactions T1 and T2) and decide to merge their distributed ledgers. This results in that the nodes A, B and D exchange their knowledge about transactions T3 and T4 so that the resulting merged distributed ledger comprises both transactions, T3 and T4, in addition to the transactions T1 and T2 that form a common history of both distributed ledgers. The same applies to nodes C, E, and F. Before the elapse of timespan t2, nodes C, E and node F belonged to different distributed ledgers. When reestablishing contact, they validate that they share a common history (transactions T1 and T2) and decide to merge their distributed ledgers. This results in that the nodes C, E, and F exchange their knowledge about transactions T3 and T4 so that the resulting merged distributed ledger comprises both transactions, T3 and T4, in addition to the transactions T1 and T2 that form a common history of both distributed ledgers. Node G, to the contrary, after timespan t2, splits off to form its own subgroup and, accordingly, does not make contact with any other node. During timespan t3, subgroup A, B, D records a transaction T5, subgroup C, E, F records a transaction T6, and node G records a transaction T7.

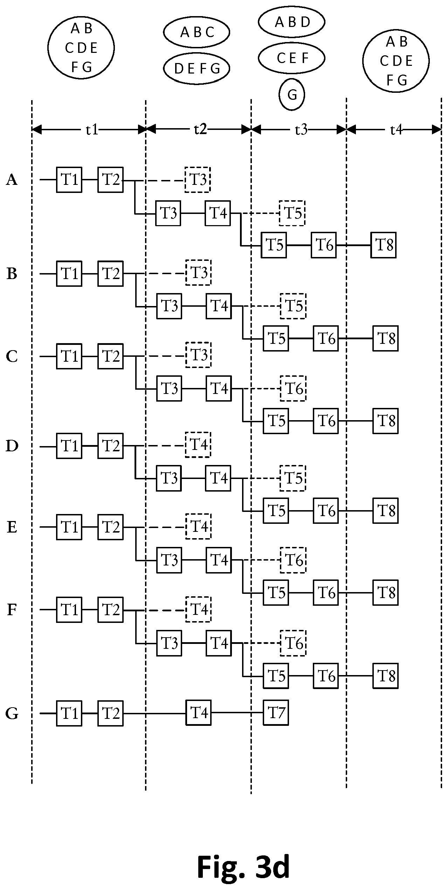

As shown in Fig. 3d, after the elapse of timespan t3, the nodes reestablish connection and form to the original group A-G. When reestablishing contact, the nodes A, B, C, D, E, and F validate that they share a common history (transactions T1, T2, T3, T4) and decide to merge their distributed ledgers. This results in that nodes A, B, C, D, E, and F exchange their knowledge about transactions T5 and T6 so that the resulting merged distributed ledger comprises both transactions, T5 and T6, in addition to the transactions T1, T2, T3 and T4 that form a common history of the previous distributed ledgers. However, as node G contains only transactions T1, T2, T4, and misses transaction T3 in its history, validating the history of node G will fail. Node G is thus not authorized to share its content with the remaining nodes. Node G is, however, free to dismiss its own history and continue contributing to the merged distributed ledger established by nodes A, B, C, D, E, and F, which will effectively result in a loss of transaction T7.

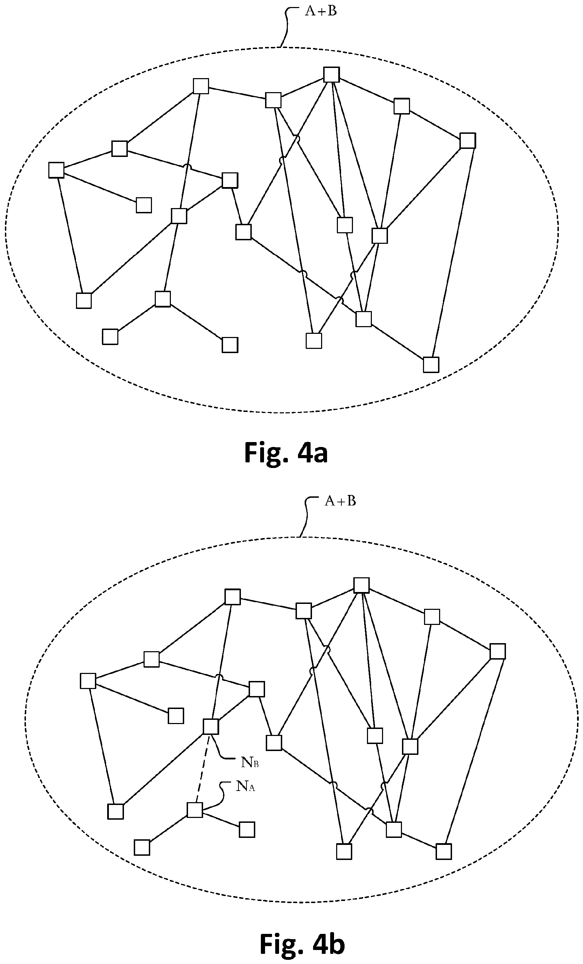

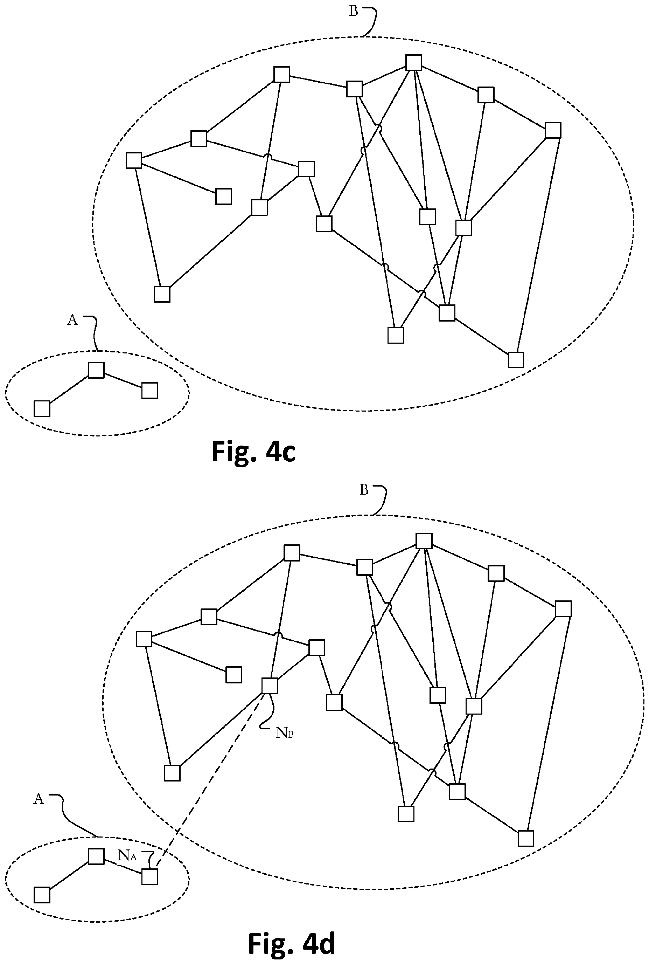

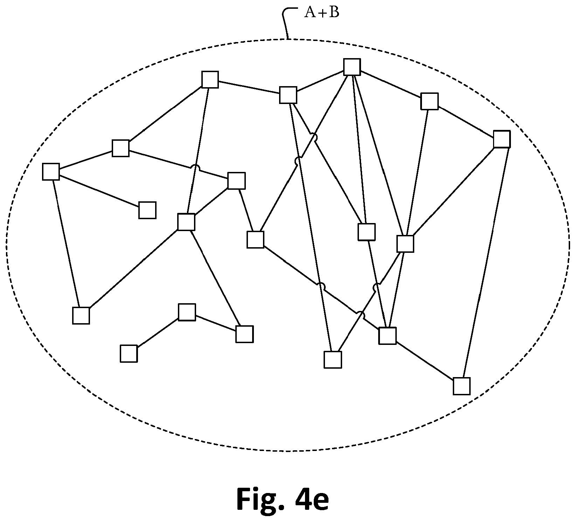

Figs. 4a-e schematically describe a second exemplifying group of nodes that split into two subgroups and subsequently reestablish connection. The example of Figs. 4a-e substantially corresponds to the example of Figs. 2a-e, however, group A that splits of group A+B is a very small group that consists only of three nodes. Initially, all nodes are in communication through e.g. a network, and maintain a distributed ledger or blockchain. At some point in time node group A gets separated from node group B. Each of the subgroups continues to maintain the distributed ledger. However, the number of devices in the subgroups of devices has changed substantially. In case the original distributed ledger uses a mining process, the number of devices in subgroup B may not be enough to provide enough computational power to perform mining.

In the embodiment described below in more detail, this may be solved in two ways. First, the complexity of the mining operation may be lowered by a factor that corresponds to the factor of reduction in computational power. In such a way, the mining process for a subgroup of devices is able to finish in a timely manner. Second, the mining process may be switched to a consensus algorithm such as the Byzantine fault tolerance protocol.

Disconnected subgroups continue to maintain a local distributed ledger or blockchain. Once a subgroup reestablishes connection to a larger group of devices, the transaction incorporated in the distributed ledger of the subgroup may be announced to the larger group and incorporated. The latter may be performed by the original consensus mechanism of the large group of devices.

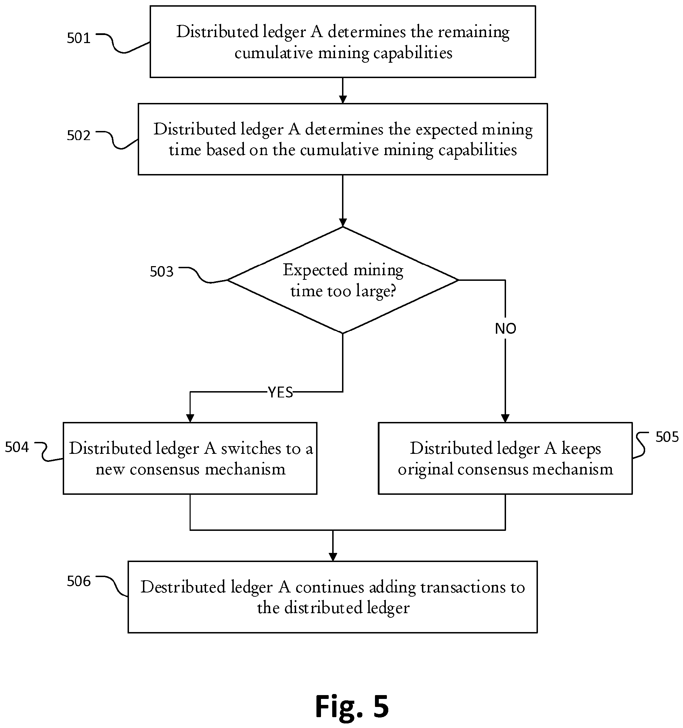

A process that may be implemented once device group A loses its connection to device group B is now further described with reference to Fig. 5.

Fig. 5 describes a process that may be implemented by device group A when it loses and subsequently reestablishes connection to device group B.

At 501, the nodes of group A (distributed ledger A) determine the cumulative mining capabilities. At 502, the nodes of distributed ledger A determine the expected mining time based on the cumulative mining capabilities determined at 501. At 503, the nodes of distributed ledger A determine whether the cumulative mining capabilities are sufficient to support adding new transactions to the distributed ledger within acceptable time. If the cumulative mining capabilities are sufficient to support adding new transactions to the distributed ledger within acceptable time, the process continues at 505. Otherwise, the process continuous at 504. At 504, the nodes in group A switch to a consensus mechanism. At 505, the nodes in group A keep their original consensus mechanism. At 506, nodes in group A continue adding transactions to the distributed ledger. During this time, the nodes act as an independent group and maintain a distributed ledger.

When a connection to node group B is reestablished, device group A may announce the transactions that have occurred to device group B and these transactions may be incorporated into the overall distributed ledger that is shared between node group A and node group B. In a similar way, node group B may announce transactions that are also incorporated in the distributed ledger to node group A.

The following table provides an example configuration of adapting a consensus algorithm:

| **Number *N* of nodes in subgroup** | **Consensus mechanism** |
|---|---|
| 100 < N | Mining (proof of work) |
| 50 < N ≤ 100 | Byzantine fault tolerance with 51% consensus required |
| 20 < N ≤ 50 | Byzantine fault tolerance with 81% consensus required |
| 0 < N ≤ 20 | Byzantine fault tolerance with 91% consensus required |

It has been described above that nodes of a distributed ledger may be represented by electronic devices.

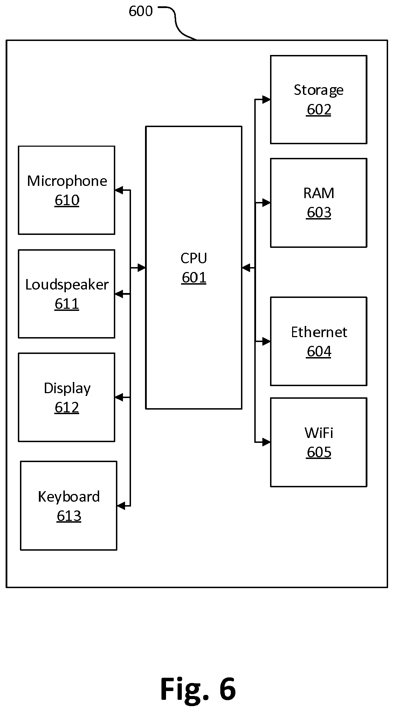

Fig. 6 schematically describes an embodiment of an electronic device 600 that may be used in context of the embodiments, e.g. as a node of a distributed ledger. The electronic device 600 comprises a CPU 601 as processor. The electronic device 600 further comprises a microphone 610, a loudspeaker 611, a display 612, and a keyboard 613 that are connected to the processor 601. These units 610, 611, 612, and 613 act as a man-machine interface and enable a dialogue between a user and the electronic device. The electronic device 600 further comprises an Ethernet interface 604 and a WiFi interface 605. These units 604, 605 act as I/O interfaces for data communication with external devices such as other nodes of a distributed ledger. The electronic device 600 further comprises a data storage 602 (e.g. a Hard Drive, Solid State Drive, or SD card) and a data memory 603 (e.g. a RAM). The data memory 603 is arranged to temporarily store or cache data or computer instructions for processing by processor 601. The data storage 602 is arranged as a long-term storage, e.g. for recording transactions in a blockchain.

It should be noted that the description above is only an example configuration. Alternative configurations may be implemented with additional or other sensors, storage devices, interfaces or the like. For example, in alternative embodiments, WiFi interface 605, microphone 610, display 612, and/or loudspeaker 611, or keyboard 613 may be omitted or replaced by other units.

The skilled person will readily appreciate that in so far it is described in the embodiments that a distributed ledger is performing some activity; it is generally understood that the nodes, i.e. the electronic devices that constitute the network, perform this action either in cooperation, or as subgroups of all devices, or as single devices. For example, a distributed ledger may create a set of challenges (e.g. 201 in Fig. 2) by configuring a single node (electronic device) to create the challenges. In other embodiments, multiple or all of the nodes contributing to the distributed ledger may be configured to perform the action. To this end, the nodes communicate with each other as known in the art of distributed ledger technology. The creation of challenges, the sending of challenges and the verifying of challenge responses may but need not necessarily be carried out by one or more full nodes of the network.

It should be recognized that the embodiments describe methods with an exemplary order of method steps. The specific order of method steps is, however, given for illustrative purposes only and should not be construed as binding. For example, the order of 501 and 503 in the embodiment of Fig. 5 may be exchanged. Other changes of the order of method steps may be apparent to the skilled person.

It should further be recognized that the division of the electronic device 600 into units 601 to 613 is only made for illustration purposes and that the present disclosure is not limited to any specific division of functions in specific units. For instance, the electronic device 600 could be implemented by a respective programmed processor, field programmable gate array (FPGA) and the like.

The methods disclosed here can also be implemented as a computer program causing a computer and/or a processor (such as CPU 601 in Fig. 6), to perform the methods when being carried out on the computer and/or processor. In some embodiments, also a non-transitory computer-readable recording medium is provided that stores therein a computer program product, which, when executed by a processor, such as the processor described above, causes the method described to be performed.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using a software-controlled data processing apparatus, it will be appreciated that a computer program providing such software control and a transmission, storage or other medium by which such a computer program is provided are envisaged as aspects of the present disclosure.

## Claims

1. A method comprising
determining if two separated distributed ledgers, a first distributed ledger and a second distributed ledger, share a common history, and
merging the two distributed ledgers if the determination has revealed that the two distributed ledgers are forks, a first fork and a second fork, of a same original distributed ledger, and
wherein determining if the two distributed ledgers are forks is based on a challenge response authentication scheme, wherein the challenge response authentication scheme comprises:
the first distributed ledger sending (S201; S202) one or more challenges (CA₁,...,CA_{L}) respectively corresponding to L blocks of transactions present in the first distributed ledger to the second distributed ledger, wherein each of the one or more challenges (CA₁,...,CA_{L}) comprises a request to return a hash value of a respective corresponding block i in L blocks of transactions in the second distributed ledger,
the second distributed ledger returning (S203) the respective hash values (H(RA₁),...,H(RA_{L})) of the L blocks of transactions in the second distributed ledger,
the first distributed ledger checking (S205) if the returned hash values (H(RA₁),...,H(RA_{L})) are correct by checking if a number of matches between the returned hash values (H(RA₁),...,H(RA_{L})) and respective hash values of the L blocks of transactions in the first distributed ledger exceeds a predefined number (K).

2. The method of claim 1, in which the determining if two forks share a common history is carried out in the case that a communication between two forks of a distributed ledger is reestablished.

3. The method of claim 1, wherein a transaction incorporated in the second fork is announced to the first fork, which is maintained by a larger group of devices (NA; NB), and incorporated into the first fork.

4. The method of claim 3, wherein the transaction is incorporated into the first fork by using the original consensus mechanism of the distributed ledger.

5. The method of claim 4, wherein the consensus mechanism of the second fork is a Byzantine fault tolerance algorithm and the consensus algorithm of the distributed ledger is mining.

6. A system (A, B) comprising one or more nodes (NA; NB) that are configured to implement a first distributed ledger and to determine if a separated second distributed ledger shares a common history,
wherein the one or more nodes (NA; NB) are configured to merge the first distributed ledger and the separated second distributed ledger if the determination has revealed that the two distributed ledgers are forks, a first fork and a second fork, of the same original distributed ledger, and
wherein determining if the two distributed ledgers are forks is based on a challenge response authentication scheme, wherein the challenge response authentication scheme comprises:
the first distributed ledger sending (S201; S202) one or more challenges (CA₁,...,CA_{L}) respectively corresponding to L blocks of transactions present in the first distributed ledger to the second distributed ledger, wherein each of the one or more challenges (CA₁,...,CA_{L}) comprises a request to return a hash value of a respective corresponding block i in L blocks of a transactions in the second distributed ledger,
the second distributed ledger returning (S203) the hash values (H(RA₁),...,H(RA_{L})) of the L blocks of transactions in the second distributed ledger,
the first distributed ledger checking (S205) if the returned hash values (H(RA₁),...,H(RA_{L})) are correct by checking if a number of matches between the returned hash values (H(RA₁),...,H(RA_{L})) and respective hash values of the L blocks of transactions in the first distributed ledger exceeds a predefined number (K).

7. The system (A, B) of claim 6, wherein the one or more nodes (NA; NB) are configured to determine if two forks share a history in the case that a communication between two forks of a distributed ledger is reestablished.

8. The system (A, B) of claim 6, wherein a transaction incorporated in the second fork is announced to the first fork, which is maintained by a larger group of nodes, and incorporated into the first fork.

9. The system of claim 8, wherein the transaction is incorporated into the first fork by using the original consensus mechanism of the distributed ledger.

## Patentansprüche

1. Verfahren, umfassend:
Bestimmen, ob zwei separate verteilte Kontenbücher, ein erstes verteiltes Kontenbuch und ein zweites verteiltes Kontenbuch, einen gemeinsamen Verlauf haben,
Vereinigen der beiden verteilten Kontenbücher, wenn die Bestimmung gezeigt hat, dass die beiden verteilten Kontenbücher Gabelungen, eine erste Gabelung und eine zweite Gabelung, eines gleichen ursprünglichen verteilten Kontobuchs sind, und
wobei das Bestimmen, ob die beiden verteilten Kontenbücher Gabelungen sind, auf einem Abfrage-Antwort-Authentisierungsschema basiert, wobei das Abfrage-Antwort-Authentisierungsschema umfasst, dass:
das erste verteilte Kontenbuch eine oder mehrere Abfragen (CA₁, ..., CA_{L}), die jeweils L Blöcken von Transaktionen entsprechen, die im ersten verteilten Kontenbuch vorhanden sind, an das zweite verteilte Kontenbuch sendet (S201; S202), wobei jede der einen oder der mehreren Abfragen (CA₁, ..., CA_{L}) eine Anforderung zum Zurücksenden eines Hash-Werts eines jeweiligen entsprechenden Blocks i in L Blöcken von Transaktionen im zweiten verteilten Knotenbuch umfasst,
das zweite verteilte Kontenbuch die jeweiligen Hash-Werte (H(RA₁), ..., H(RA_{L})) der L Blöcke von Transaktionen im zweiten verteilten Kontenbuch zurücksendet (S203),
das erste verteilte Kontenbuch prüft (S205), ob die zurückgesendeten Hash-Werte (H(RA₁), ..., H(RA_{L})) korrekt sind, indem es prüft, ob eine Anzahl von Übereinstimmungen zwischen den zurückgesendeten Hash-Werten (H(RA₁), ..., H(RAL)) und jeweiligen Hash-Werten der L Blöcke von Transaktionen im ersten verteilten Kontenbuch eine vordefinierte Anzahl (K) überschreitet.

2. Verfahren nach Anspruch 1, wobei das Bestimmen, ob zwei Gabelungen einen gemeinsamen Verlauf haben, durchgeführt wird, falls eine Kommunikation zwischen zwei Gabelungen eines verteilten Kontenbuchs wiederhergestellt wird.

3. Verfahren nach Anspruch 1, wobei eine Transaktion, die in der zweiten Gabelung umfasst ist, der ersten Gabelung angekündigt wird, die von einer größeren Gruppe von Vorrichtungen (NA; NB) verwaltet wird, und in die erste Gabelung aufgenommen wird.

4. Verfahren nach Anspruch 3, wobei die Transaktion durch Verwenden des ursprünglichen Konsensmechanismus des verteilten Kontenbuchs in die erste Gabelung aufgenommen wird.

5. Verfahren nach Anspruch 4, wobei der Konsensmechanismus der zweiten Gabelung ein byzantinischer Fehlertoleranzalgorithmus ist, und der Konsensalgorithmus des verteilten Kontenbuchs Mining ist.

6. System (A, B), umfassend einen oder mehrere Knoten (NA; NB), die so konfiguriert sind, dass sie ein erstes Kontenbuch implementieren und bestimmen, ob ein separates verteiltes Kontenbuch einen gemeinsamen Verlauf hat,
wobei der eine oder die mehreren Knoten (NA; NB) so konfiguriert sind, dass sie das erste verteilte Kontenbuch und das zweite verteilte Kontenbuch vereinigen, wenn die Bestimmung gezeigt hat, dass die beiden verteilten Kontenbücher Gabelungen, eine erste Gablung und eine zweite Gabelung, des gleichen ursprünglichen Kontenbuchs sind, und
wobei das Bestimmen, ob die beiden verteilten Kontenbücher Gabelungen sind, auf einem Abfrage-Antwort-Authentisierungsschema basiert, wobei das Abfrage-Antwort-Authentisierungsschema umfasst, dass:
das erste verteilte Kontenbuch eine oder mehrere Abfragen (CA₁, ..., CA_{L}), die jeweils L Blöcken von Transaktionen entsprechen, die im ersten verteilten Kontenbuch vorhanden sind, an das zweite verteilte Kontenbuch sendet (S201; S202), wobei jede der einen oder der mehreren Abfragen (CA₁, ..., CA_{L}) eine Anforderung zum Zurücksenden eines Hash-Werts eines jeweiligen entsprechenden Blocks i in L Blöcken von Transaktionen im zweiten verteilten Knotenbuch umfasst,
das zweite verteilte Kontenbuch die Hash-Werte (H(RA₁), ..., H(RA_{L})) der L Blöcke von Transaktionen im zweiten verteilten Kontenbuch zurücksendet (S203),
das erste verteilte Kontenbuch prüft (S205), ob die zurückgesendeten Hash-Werte (H(RA₁), ..., H(RA_{L})) korrekt sind, indem es prüft, ob eine Anzahl von Übereinstimmungen zwischen den zurückgesendeten Hash-Werten (H(RA1), ..., H(RAL)) und jeweiligen Hash-Werten der L Blöcke von Transaktionen im ersten verteilten Kontenbuch eine vordefinierte Anzahl (K) überschreitet.

7. System (A, B) nach Anspruch 6, wobei der eine oder die mehreren Knoten (NA; NB) so konfiguriert sind, dass sie bestimmen, ob zwei Gabelungen einen gemeinsamen Verlauf haben, falls eine Kommunikation zwischen zwei Gabelungen eines verteilten Kontenbuchs wiederhergestellt wird.

8. System (A, B) nach Anspruch 6, wobei eine Transaktion, die in der zweiten Gabelung umfasst ist, der ersten Gabelung angekündigt wird, die von einer größeren Gruppe von Knoten verwaltet wird, und in die erste Gabelung aufgenommen wird.

9. System nach Anspruch 8, wobei die Transaktion durch Verwenden des ursprünglichen Konsensmechanismus des verteilten Kontenbuchs in die erste Gabelung aufgenommen wird.

## Revendications

1. Procédé comprenant :
la détermination que deux registres distribués séparés, un premier registre distribué et un second registre distribué, partagent ou non un historique commun, et
la fusion des registres distribués si la détermination établit que les registres distribués sont des fourches, une première fourche et une seconde fourche, d'un même registre distribué d'origine, et
dans lequel la détermination que les deux registres distribués sont ou non des fourches est basée sur un schéma d'authentification de réponse de défi, le schéma d'authentification de réponse de défi comprenant :
l'envoi par le premier registre distribué (S201 ; S202) d'un ou plusieurs défis (CA₁, ...CA_{L}) correspondant respectivement à L blocs de transactions présents dans le premier registre distribué au second registre distribué, chacun des un ou plusieurs défis (CA₁, ..., CA_{L}) comprenant une demande de renvoi d'une valeur de hachage d'un bloc correspondant respectif i dans L blocs de transactions dans le second registre distribué,
le renvoi par le second registre distribué (S203) des valeurs de hachage respectives (H(RA₁), ..., H(RA_{L})) des L blocs de transactions dans le second registre distribué,
la vérification par le premier registre distribué (S205) que les valeurs de hachage renvoyées (H(RA₁), ..., H(RA_{L})) sont correctes ou non en vérifiant qu'un nombre de correspondances entre les valeurs de hachage renvoyées (H(RA₁), ..., H(RA_{L})) et des valeurs de hachage respectives des L blocs de transactions dans le premier registre distribué dépasse ou non un nombre prédéfini (K).

2. Procédé selon la revendication 1, dans lequel la détermination que deux fourches partagent ou non un historique commun est réalisée dans le cas d'un rétablissement d'une communication entre deux fourches d'un registre distribué.

3. Procédé selon la revendication 1, dans lequel une transaction incorporée dans la deuxième fourche est annoncée à la première fourche, laquelle est maintenue par un groupe plus important de dispositifs (NA ; NB), et incorporée dans la première fourche.

4. Procédé selon la revendication 3, dans lequel la transaction est incorporée dans la première fourche en utilisant le mécanisme de consensus d'origine du registre distribué.

5. Procédé selon la revendication 4, dans lequel le mécanisme de consensus de la seconde fourche est un algorithme des généraux byzantins et l'algorithme de consensus du registre distribué est un algorithme de minage.

6. Système (A, B) comprenant un ou plusieurs nœuds (NA ; NB) configurés pour mettre en œuvre un premier registre distribué et déterminer qu'un second registre distribué séparé partage ou non un historique commun,
dans lequel les un ou plusieurs nœuds (NA ; NB) sont configurés pour fusionner le premier registre distribué et le second registre distribué séparé si la détermination a révélé que les deux registres distribués sont des fourches, une première fourche et une seconde fourche, du même registre distribué d'origine, et
dans lequel la détermination que les deux registres distribués sont ou non des fourches est basée sur un schéma d'authentification de réponse de défi, le schéma d'authentification de réponse de défi comprenant :
l'envoi par le premier registre distribué (S201 ; S202) d'un ou plusieurs défis (CA₁, ..., CA_{L}) correspondant respectivement à L blocs de transactions présents dans le premier registre distribué au second registre distribué, chacun des un ou plusieurs défis (CA₁, ..., CA_{L}) comprenant une demande de renvoi d'une valeur de hachage d'un bloc correspondant respectif i dans L blocs de transactions dans le second registre distribué,
le renvoi par le second registre distribué (S203) des valeurs de hachage respectives (H(RA₁), ..., H(RA_{L})) des L blocs de transactions dans le second registre distribué,
la vérification par le premier registre distribué (S205) que les valeurs de hachage renvoyées (H(RA₁), ..., H(RA_{L})) sont correctes ou non en vérifiant qu'un nombre de correspondances entre les valeurs de hachage renvoyées (H(RA₁), ..., H(RA_{L})) et des valeurs de hachage respectives des L blocs de transactions dans le premier registre distribué dépasse ou non un nombre prédéfini (K).

7. Système (A, B) selon la revendication 6, dans lequel un ou plusieurs nœuds (NA ; NB) sont configurés pour déterminer que deux fourches partagent ou non un historique dans le cas où une communication entre deux fourches d'un registre distribué est rétablie.

8. Système (A, B) selon la revendication 6, dans lequel une transaction incorporée dans la deuxième fourche est annoncée à la première fourche, laquelle est maintenue par un groupe plus important de dispositifs, et incorporée dans la première fourche.

9. Système selon la revendication 8, dans lequel la transaction est incorporée dans la première fourche en utilisant le mécanisme de consensus d'origine du registre distribué.
